# EUROPÄISCHE PATENTSCHRIFT

(11) **EP 4 043 218 B1**
(45) Veröffentlichungstag und Bekanntmachung des Hinweises auf die Patenterteilung: **03.07.2024**
(21) Anmeldenummer: 22151498.7
(22) Anmeldetag: 14.01.2022
(51) Int. Cl.: B41F 33/00

(54) **DRUCKMASCHINE MIT EINER VORRICHTUNG ZUM FÖRDERN VON BEDRUCKSTOFF UND MIT EINER KAMERA**
PRINTING MACHINE WITH A DEVICE FOR CONVEYING PRINTED MATERIAL AND WITH A CAMERA
MACHINE D'IMPRESSION DOTÉE D'UN DISPOSITIF DE TRANSPORT DE SUPPORT À IMPRIMER ET D'UNE CAMÉRA

(30) Priorität: 11.02.2021 EP 21156557
(43) Veröffentlichungstag der Anmeldung: 17.08.2022
(73) Patentinhaber: Heidelberger Druckmaschinen AG, 69115 Heidelberg (DE)
(72) Erfinder: Fergen, Immanuel, 76229 Karlsruhe (DE); Godau, Christoph, 68159 Mannheim (DE); Albrecht, Dominik, 69254 Malsch (DE); Böttger, Andreas, 69118 Heidelberg (DE); Gieser, Michael, 68723 Oftersheim (DE)

(56) Entgegenhaltungen:
- DE-A1- 4 321 177
- DE-A1-102010 030 789
- US-A1- 2019 224 963

## Beschreibung

### Erfindung

Die Erfindung betrifft eine Druckmaschine mit einer Vorrichtung zum Fördern von Bedruckstoff und mit einer Kamera mit den Merkmalen des Oberbegriffs von Anspruch 1.

### Gebiet der Technik

Die Erfindung liegt auf dem technischen Gebiet der grafischen Industrie und dort insbesondere im Bereich des als Offsetdruck bekannten indirekten Flachdrucks auf flache Substrate, d.h. des bildgemäßen Auftragens von Druckfluiden wie Offsetfarbe, Lack oder Grundierung auf bogen-, bahn-, folien- oder etikettenförmigen Bedruckstoffe, bevorzugt aus Papier, Karton, Pappe, Kunststoff, Metall oder Verbundmaterial. Insbesondere liegt die Erfindung im Teilgebiet der kameragebundenen Inspektion von Drucken in der Druckmaschine ("inline").

### Stand der Technik

Die EP1582350A1offenbart ein Gehäuse mit LED-Lichtquelle, Spiegeln und CCD-Kamera für die Inspektion von Drucken. Die Vorrichtung ist "inline" in einer Druckmaschine einsetzbar.

Die US8810810B2offenbart eine Druckmaschine mit Druckwerken und einem Tritt für einen Bediener zwischen den Druckwerken. Eine Kamera zur Inspektion von Drucken ist weit oberhalb des Trittes angeordnet.

Die WO2007077592A1offenbart Blasluft beim Einsatz einer Vorrichtung zur Inspektion von Drucken.

DE 10 2010 030789 A1 offenbart ein Bogeninspektionssystem. Dieses umfasst eine Messeinrichtung, z.B. eine Kamera, und eine Beleuchtungseinrichtung an einer schwenkbaren Halterung, welche in ihrer Arbeitsposition seitlich von einem Klapptritt hinter einem Druckwerkschutz angeordnet ist. Zudem kann eine Blasluftkühlung vorgesehen sein, welche auch dazu verwendet werden kann, die Messeinrichtung und ggf. die Beleuchtungseinrichtung vor Verschmutzung zu schützen.

Die DE 43 21 177 A1 offenbart eine Vorrichtung zur Bildinspektion. Diese umfasst eine Bilderfassungseinrichtung mit einem Bildleiter, einer Beleuchtungseinrichtung und einer Blaseinrichtung; sie ist um ein Befestigungsrohr in eine Messposition schwenkbar. Die Blaseinrichtung kann zudem zur Kühlung der Beleuchtungseinrichtung eingesetzt werden.

### Technische Aufgabe

Es ist eine Aufgabe der vorliegenden Erfindung, eine Verbesserung gegenüber dem Stand der Technik zu schaffen, welche es insbesondere ermöglicht, den Bedruckstoff in der Druckmaschine problemfrei zu inspizieren.

### Erfindungsgemäße Lösung der Aufgabe

Diese Aufgabe wird erfindungsgemäß durch eine Druckmaschine nach Anspruch 1 gelöst. Vorteilhafte und daher bevorzugte Weiterbildungen der Erfindung ergeben sich aus den Unteransprüchen sowie aus der Beschreibung und den Zeichnungen.

Eine erfindungsgemäße Druckmaschine mit einer Vorrichtung zum Fördern von Bedruckstoff und mit einer Kamera und wenigstens einer Lichtquelle, wobei die Kamera und die Lichtquelle an einem Rahmen angeordnet sind, welcher zusammen mit der Kamera und der Lichtquelle um eine horizontale Achse schwenkbar ausgebildet ist und eine Arbeitsposition aufweist, wobei die Kamera wenigstens einen Abschnitt des Bedruckstoffs erfasst, und wobei eine Verriegelungsvorrichtung vorgesehen ist, welche den Rahmen in der Arbeitsposition positioniert, zeichnet sich dadurch aus, dass der Rahmen einen Anschluss für Kühlwasser umfasst.

### Vorteilhafte Ausbildungen und Wirkungen der Erfindung

Die Erfindung ermöglicht es in vorteilhafter Weise, den Bedruckstoff in der Druckmaschine problemfrei zu inspizieren. Durch das Vorsehen des schwenkbaren Rahmens und die hierdurch bewirkte Schwenkbarkeit der am Rahmen angeordneten Kamera, ist es einem Bediener auf einfache Weise möglich, die Kamera - z.B. zum Zweck der Wartung, der Reinigung oder des Austauschs - aus Ihrer Arbeitsposition heraus und in eine leicht zugängliche Position, z.B. eine Wartungsposition, hinein zu schwenken. Außer der Kamera können in vorteilhafter Weise auch weitere Komponenten für eine Inspektion an dem Rahmen angeordnet und mit diesem gemeinsam schwenkbar sein. Erfindungsgemäß ist vorgesehen, dass wenigstens eine Lichtquelle am Rahmen angeordnet ist und dass der Rahmen zusammen mit der Kamera und der Lichtquelle schwenkbar ist. Es ist ein besonderer Vorteil, dass die Kamera und die Lichtquelle - durch ihre gemeinsame Anordnung am Rahmen - zueinander immer exakt ausgerichtet bleiben und dadurch stets eine hochqualitative Inspektion möglich ist. Es ist ein weiterer besonderer Vorteil, dass sich nach dem Schwenken des Rahmens in die (Arbeits-) Position alle am Rahmen angeordneten Komponenten exakt in ihrer jeweils vorgesehenen (Arbeits-) Position befinden.

Erfindungsgemäß ist vorgesehen, dass der Rahmen einen Anschluss für Kühlwasser umfasst und dass eine Verriegelungsvorrichtung vorgesehen ist, welche den Rahmen in der Arbeitsposition positioniert. Dies ist bei der Lösung der Aufgabe von Vorteil.

Ein weiterer Vorteil ergibt sich dadurch, dass der Rahmen auf einfache Weise mit allen Komponenten justiert, insbesondere feinjustiert werden kann. Hierdurch kann die Qualität der Inspektion verbessert werden.

Unter Inspektion soll in dieser Anmeldung auch eine Farbmessung verstanden werden.

### Weiterbildungen der Erfindung

Im Folgenden werden bevorzugte Weiterbildung der Erfindung (kurz: Weiterbildungen) beschrieben.

Eine Weiterbildung kann sich dadurch auszeichnen, dass die Kamera als eine CMOS-Kamera oder als eine CCD-Kamera ausgebildet ist.

Eine Weiterbildung kann sich dadurch auszeichnen, dass der Anschluss für Kühlwasser direkt am Rahmen oder indirekt an einer am Rahmen angeordneten Komponente angeordnet ist und/oder dass die Verriegelungsvorrichtung den Rahmen aktiv in die Arbeitsposition drückt

Noch eine Weiterbildung kann sich dadurch auszeichnen, dass die Lichtquelle mehrere LED umfasst. Die LED können positionsfest oder positionierbar, insbesondere verschiebbar, angeordnet sein.

Eine Weiterbildung kann sich dadurch auszeichnen, dass wenigstens ein Spiegel am Rahmen angeordnet ist und dass der Rahmen zusammen mit der Kamera, der Lichtquelle und dem Spiegel schwenkbar ist. Es ist ein besonderer Vorteil, dass die Kamera, die Lichtquelle und der Spiegel - durch ihre gemeinsame Anordnung am Rahmen - zueinander immer exakt ausgerichtet bleiben und dadurch stets eine hochqualitative Inspektion möglich ist. Es ist ein weiterer besonderer Vorteil, dass sich nach dem Schwenken des Rahmens in die (Arbeits-) Position alle am Rahmen angeordneten Komponenten exakt in ihrer jeweils vorgesehenen (Arbeits-) Position befinden.

Eine Weiterbildung kann sich dadurch auszeichnen, dass wenigstens eine Blasvorrichtung am Rahmen angeordnet ist und dass der Rahmen zusammen mit der Kamera und der Blasvorrichtung schwenkbar ist. Es ist ein besonderer Vorteil, dass die Kamera und die Blaseinrichtung (und soweit vorhanden die Lichtquelle und der Spiegel) - durch ihre gemeinsame Anordnung am Rahmen - zueinander immer exakt ausgerichtet bleiben und dadurch stets eine hochqualitative Inspektion möglich ist. Es ist ein weiterer besonderer Vorteil, dass sich nach dem Schwenken des Rahmens in die (Arbeits-) Position alle am Rahmen angeordneten Komponenten exakt in ihrer jeweils vorgesehenen (Arbeits-) Position befinden.

Noch eine Weiterbildung kann sich dadurch auszeichnen, dass die Blasvorrichtung als eine Blasleiste ausgebildet ist.

Eine Weiterbildung kann sich dadurch auszeichnen, dass die Blasvorrichtung Blasluft auf den Bedruckstoff richtet, um den Bedruckstoff auf die Vorrichtung zum Fördern von Bedruckstoff zu drücken und zu stabilisieren. Hierdurch kann die Qualität der Inspektion deutlich verbessert werden.

Eine Weiterbildung kann sich dadurch auszeichnen, dass die Blasvorrichtung Blasluft auf die Kamera und/oder die Lichtquelle richtet, um die Kamera bzw. die Lichtquelle zu reinigen, z.B. von Papierstaub oder Puder.

Eine Weiterbildung kann sich dadurch auszeichnen, dass der Rahmen unter einem Tritt für einen Bediener der Druckmaschine angeordnet ist.

Noch eine Weiterbildung kann sich dadurch auszeichnen, dass der Tritt zwischen zwei Druckwerken der Druckmaschine angeordnet ist.

Noch eine Weiterbildung kann sich dadurch auszeichnen, dass der Tritt um eine horizontale Achse schwenkbar ausgebildet ist.

Noch eine Weiterbildung kann sich dadurch auszeichnen, dass der Rahmen und der Tritt separat schwenkbar sind.

Noch eine Weiterbildung kann sich dadurch auszeichnen, dass der Anschluss für Kühlwasser eine Schnellkupplung umfasst.

Noch eine Weiterbildung kann sich dadurch auszeichnen, dass der Rahmen im Bereich eines Wendewerkes zwischen zwei Druckwerken der Druckmaschine angeordnet ist.

Noch eine Weiterbildung kann sich dadurch auszeichnen, dass der Rahmen im Bereich nach einem letzten Druckwerk und vor einem Ausleger der Druckmaschine angeordnet ist.

Eine Weiterbildung kann sich dadurch auszeichnen, dass der Rahmen zusammen mit der Kamera, der Lichtquelle, dem Spiegel und der Blasvorrichtung aus der Druckmaschine entnehmbar ist.

Eine Weiterbildung kann sich dadurch auszeichnen, dass die Kamera derart auf den Bedruckstoff gerichtet ist, dass betriebsmäßig, d.h. beim Betrieb der Kamera, eine Inspektion und/oder Farbmessung eines Druckbildes auf dem Bedruckstoff erfolgt.

Noch eine Weiterbildung kann sich dadurch auszeichnen, dass die Druckmaschine eine bogenverarbeitende Offsetdruckmaschine ist.

Noch eine Weiterbildung kann sich dadurch auszeichnen, dass die Druckmaschine eine Tintendruckmaschine ist.

### Ausführungsbeispiele zur Erfindung und Figuren

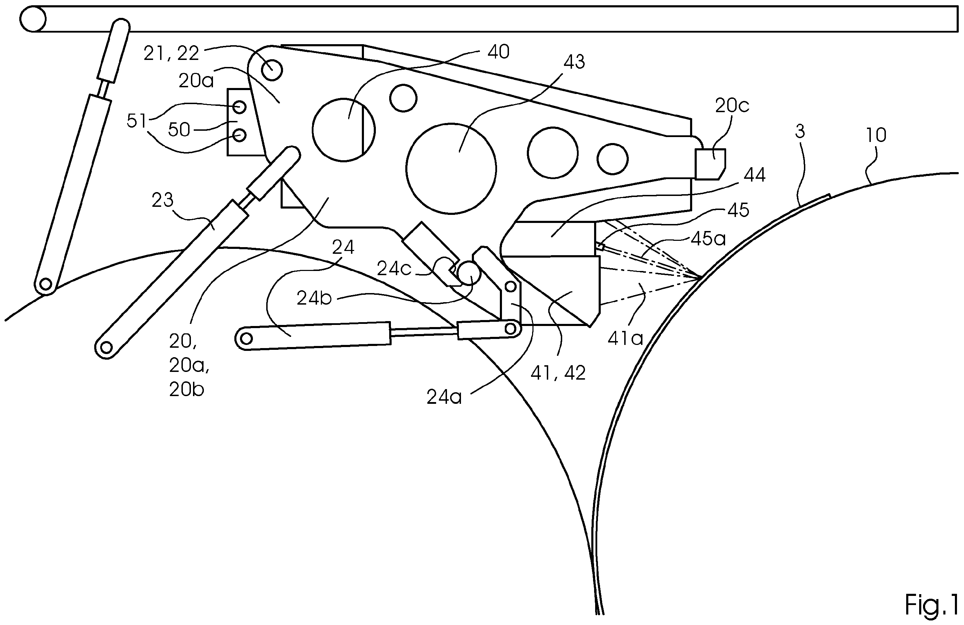

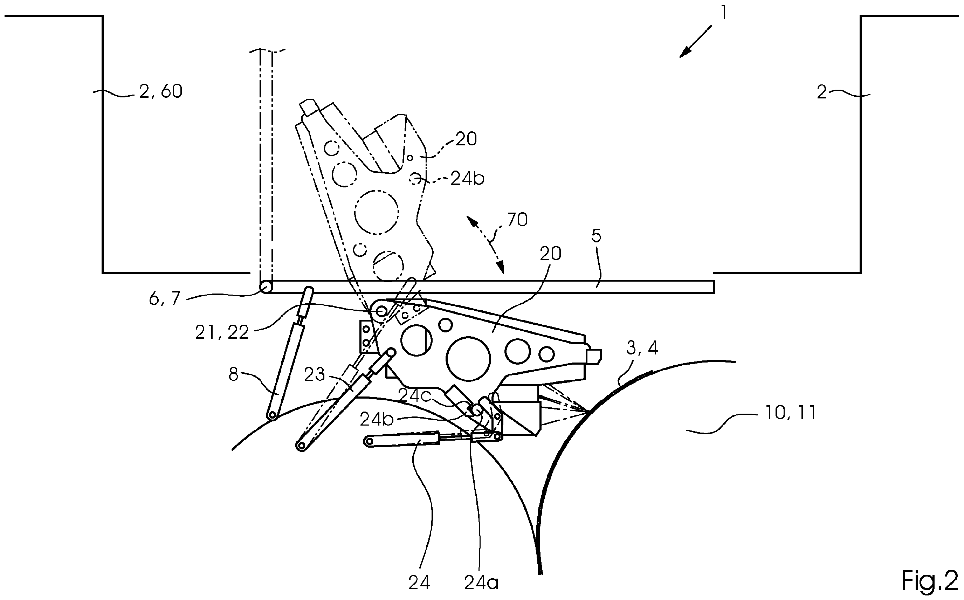

Die Figuren 1 und 2 zeigen ein bevorzugtes Ausführungsbeispiel der Erfindung und der Weiterbildungen. Einander entsprechende Merkmale sind in den Figuren mit denselben Bezugszeichen versehen.

### Figuren 1 und 2 zeigen:

Die Druckmaschine umfasst einen Tritt 5 für einen Bediener. Der Tritt ist zwischen den Druckwerken 2 oder zwischen einem Druckwerk 2 und dem Ausleger 60 angeordnet. Der Tritt ist um eine horizontale Achse 6 schwenkbar. Hierzu ist ein Schwenklager 7 vorgesehen. Der Tritt kann einen Antrieb 8 für das automatische Schwenken umfassen. Der Tritt kann aus der Horizontalen (z.B. zu Wartungszwecken) nach oben bzw. in die Vertikale geschwenkt werden.

Die Druckmaschine umfasst einen Rahmen 20. Der Rahmen ist unter dem Tritt 5 angeordnet. Der Rahmen ist um eine horizontale Achse 21 schwenkbar. Hierzu ist ein Schwenklager 22 vorgesehen. Der Rahmen kann einen Antrieb 23 für das automatische Schwenken umfassen. Der Antrieb kann ein Linearmotor sein. Anstelle des gezeigten Antriebs kann ein rotativer Antrieb an der Achse 21 vorgesehen sein. Anstelle des gezeigten Antriebs kann eine Gasdruckfeder vorgesehen sein. Der Rahmen kann nach oben geschwenkt werden: aus einer eher horizontalen Ausrichtung in eine eher vertikale Ausrichtung. Der Schwenkbereich kann etwa 90° bis etwa 180° betragen.

Bevorzugt wird zuerst der Tritt 5 nach oben geschwenkt und dann der Rahmen 20. Der Tritt wird bevorzugt per Hand nach oben geschwenkt, der Rahmen bevorzugt automatisch mittels eines Antriebs. Es kann aber auch vorgesehen sein, dass der Tritt und der Rahmen gleichzeitig nach oben geschwenkt werden. Beispielsweise kann der Rahmen an den Tritt angekoppelt sein.

Am Rahmen 20 ist eine Kamera 40 angeordnet. Die Kamera ist bevorzugt eine CMOS-Kamera, alternativ eine CCD-Kamera. Es können auch zwei oder mehr Kameras angeordnet sein, bevorzugt quer zur Maschinenrichtung.

Am Rahmen 20 ist des Weiteren bevorzugt eine Lichtquelle 41 angeordnet, welche Licht 41a erzeugt und auf den Bedruckstoff 3 oder wenigstens einen Abschnitt 4 des Bedruckstoffs richtet. Das Licht trifft bevorzugt als ein Lichtstreifen auf den Bedruckstoff. Die Lichtquelle kann eine oder mehrere LED umfassen, z.B. eine LED-Zeile. Es können auch zwei oder mehr Lichtquellen angeordnet sein, bevorzugt quer zur Maschinenrichtung.

Am Rahmen 20 ist des Weiteren bevorzugt wenigstens ein Spiegel 43 angeordnet. Es können auch mehrere Spiegel angeordnet sein. Im gezeigten Beispiel sind mehrere Spiegel zu einem Spiegelkasten 43 (Gehäuse mit innen angeordneten Spiegeln) zusammengefasst. Über den Spiegel (oder die mehreren Spiegel) wird das Licht 41a vom Bedruckstoff 3 zur Kamera (oder den mehreren Kameras) gespiegelt.

Am Rahmen 20 ist des Weiteren bevorzugt eine Blasvorrichtung 44 angeordnet. Diese umfasst bevorzugt eine Blasleiste 45 zum Erzeugen von Blasluft 45a, z.B. ein Rohr quer zur Maschinenrichtung mit einer Vielzahl von Löchern für den Luftaustritt. Die Blasluft ist bevorzugt auf den Bedruckstoff 3 gerichtet. Die Blasvorrichtung kann schwenkbar ausgebildet sein, so dass die Blasluft (zu Reinigungszwecken) auch auf die Kamera und/oder die Spiegel gerichtet werden kann. Alternativ kann für das Reinigen wenigstens eine weitere Blasvorrichtung vorgesehen sein.

Da der Rahmen 20 schwenkbar ist (siehe Doppelpfeil: Schwenkbewegung 70), sind auch die am Rahmen angeordneten Komponenten (Kamera 40 und bevorzugt Lichtquelle 41, Spiegel 43 und/oder Blasvorrichtung 44) Weise zusammen mit dem Rahmen schwenkbar. Alle am Rahmen angeordneten Komponenten können gemeinsam und gleichzeitig durch Schwenken des Rahmens aus der Arbeitsposition (Inspektionsposition) z.B. in eine Wartungsposition geschwenkt werden.

Das Schwenken (oder Absenken in die Arbeitsposition) kann durch einen oder mehrere Anschläge begrenzt sein, auf dem/denen der Rahmen betriebsmäßig aufliegt. Zusätzlich kann/können ein oder mehrere Dämpfer vorgesehen sein.

Es ist eine Verriegelungsvorrichtung 24 vorgesehen, um eine wiederholgenaue und stabile Positionierung des Rahmens in der Arbeitsposition zu gewährleisten. Die Verriegelungsvorrichtung kann den Rahmen aktiv in die Arbeitsposition drücken, wodurch sich eine definierte Endlage ergibt und wodurch - auch bei eventuellen Schwingungen - es nicht zu einem störenden Abheben des Rahmens kommen kann. Hierzu weist die Verriegelungsvorrichtung bevorzugt einen Zylinder 24 auf, der einen Heben 24a betätigt, welcher einen Zapfen 24b des Rahmens 20 gegen einen maschinenseitigen Anschlag 24c drückt. In Figur 2 ist die Verriegelungsvorrichtung in geschlossener und in offener Position gezeigt.

Am Rahmen 20 ist auch ein Anschluss für Kühlwasser vorgesehen, bevorzugt eine oder mehrere Schnellkupplung/-en. Der Anschluss kann dabei direkt am Rahmen angeordnet sein oder indirekt an einer der am Rahmen angeordneten Komponenten, bevorzugt an der Kamera oder an der Lichtquelle.

Figur 1 zeigt weiterhin: Das Licht 41a der Lichtquelle 41 gelangt als Lichtstreifen auf einen Abschnitt 4 des Bedruckstoff 3 und von dort durch den Spiegelkasten 43 zur Kamera 40.

Figur 1 zeigt weiterhin: Der Rahmen umfasst (in Richtung quer zur Maschinenrichtung; also senkrecht zur Zeichnungsebene der Figur) zwei im wesentlichen identische Seitenteile 20a, welche bevorzugt mehrfach durchbrochen sind (das vordere Seitenteil auf der Bedienseite BS der Maschine verdeckt in der Figur das hintere Seitenteil auf der Antriebsseite AS der Maschine ). Der Rahmen umfasst weiterhin ein ebenfalls im wesentlichen identisches Mittenteil 20b des (das vordere Seitenteil verdeckt in der Figur das Mittenteil zwischen AS und BS). Die Seitenteile und das dazwischen befindliche Mittenteil sind bevorzugt über mehrere Stangen miteinander verbunden. Beispielhaft ist eine der Stangen 20c, bzw. deren Ende, dargestellt (die Achse der Stange steht senkrecht auf der Zeichnungsebenen der Figur). Der Rahmen hat somit einen kompakten Aufbau und ein geringes Gewicht. Hierdurch wird das Schwenken erleichtert. Zwischen den Seitenteilen und dem Mittenteil kann jeweils ein Spiegelkasten 43 und eine Kamera 40 angeordnet sein: in Summe somit zwei Spiegelkästen und zwei Kameras.
Figur 1 zeigt weiterhin: Es können Schnellkupplungen 51 als Anschluss 50 für Kühlwasser vorgesehen sein; diese sind aufgrund der offenen Bauweise des Rahmens leicht zugänglich.
Figur 2 zeigt beispielhaft eine Bogen verarbeitende Druckmaschine 1 mit zwei aufeinander folgenden Druckwerken 2. Das erste der beiden Druckwerke 2 umfasst - als Vorrichtung 10 zum Fördern von Bedruckstoff 3 - einen Zylinder 11.

Figur 2 zeigt ebenfalls beispielhaft eine Bogen verarbeitende Druckmaschine 1 mit einem (letzten) Druckwerk 2 und einem Ausleger 60. Druckwerk 2 umfasst wiederum - als Vorrichtung 10 zum Fördern von Bedruckstoff 3 - einen Zylinder 11.

### Bezugszeichenliste

- 1: Druckmaschine
- 2: Druckwerke
- 3: Bedruckstoff
- 4: Abschnitt des Bedruckstoffs
- 5: Tritt
- 6: Horizontale Achse
- 7: Schwenklager
- 8: Antrieb
- 10: Vorrichtung
- 11: Zylinder
- 20: Rahmen
- 20a: Seitenteile
- 20b: Mittenteil
- 20c: Stangen
- 21: Horizontale Achse
- 22: Schwenklager
- 23: Antrieb
- 24: Verriegelungsvorrichtung
- 40: Kamera, insbesondere CMOS- oder CCD-Kamera
- 41: Lichtquelle
- 41a: Licht
- 42: LED
- 43: Spiegelkasten mit Spiegel(n)
- 44: Blasvorrichtung
- 45: Blasleiste
- 45a: Blasluft
- 50: Anschluss für Kühlwasser
- 51: Schnellkupplung
- 60: Ausleger
- 70: Schwenken bzw. Schwenkbewegung

## Patentansprüche

1. Druckmaschine mit einer Vorrichtung (10) zum Fördern von Bedruckstoff (3) und mit einer Kamera (40) und wenigstens einer Lichtquelle (41), wobei die Kamera (40) und die Lichtquelle (41) an einem Rahmen (20) angeordnet sind, welcher zusammen mit der Kamera (40) und der Lichtquelle (41) um eine horizontale Achse (21) schwenkbar ausgebildet ist und eine Arbeitsposition aufweist, wobei die Kamera (40) wenigstens einen Abschnitt (4) des Bedruckstoffs erfasst, und wobei eine Verriegelungsvorrichtung (24) vorgesehen ist, welche den Rahmen (20) in der Arbeitsposition positioniert,
**dadurch gekennzeichnet,**
**dass** der Rahmen (20) einen Anschluss (50) für Kühlwasser umfasst.

2. Druckmaschine nach Anspruch 1,
**dadurch gekennzeichnet,**
**dass** der Anschluss (50) für Kühlwasser direkt am Rahmen (20) oder indirekt an einer am Rahmen angeordneten Komponente angeordnet ist und/oder dass die Verriegelungsvorrichtung (24) den Rahmen (20) aktiv in die Arbeitsposition drückt.

3. Druckmaschine nach Anspruch 2,
**dadurch gekennzeichnet,**
**dass** wenigstens ein Spiegel (43) am Rahmen (20) angeordnet ist und dass der Rahmen zusammen mit der Kamera (40), der Lichtquelle (41) und dem Spiegel schwenkbar ist.

4. Druckmaschine nach einem der vorhergehenden Ansprüche,
**dadurch gekennzeichnet,**
**dass** wenigstens eine Blasvorrichtung (44) am Rahmen (20) angeordnet ist und dass der Rahmen zusammen mit der Kamera (40) und der Blasvorrichtung (44) schwenkbar ist.

5. Druckmaschine nach Anspruch 4,
**dadurch gekennzeichnet,**
**dass** die Blasvorrichtung (44) Blasluft (45a) auf den Bedruckstoff (3) richtet, um den Bedruckstoff auf die Vorrichtung (10) zum Fördern von Bedruckstoff zu drücken.

6. Druckmaschine nach Anspruch 4,
**dadurch gekennzeichnet,**
**dass** die Blasvorrichtung (44) Blasluft (45a) auf die Kamera (40) und/oder die Lichtquelle (41) richtet, um die Kamera bzw. die Lichtquelle zu reinigen.

7. Druckmaschine nach einem der vorhergehenden Ansprüche,
**dadurch gekennzeichnet,**
**dass** der Rahmen (20) unter einem Tritt (5) für einen Bediener der Druckmaschine (1) angeordnet ist.

8. Druckmaschine nach Anspruch 7,
**dadurch gekennzeichnet,**
**dass** der Rahmen (20) und der Tritt (5) separat schwenkbar sind.

9. Druckmaschine nach einem der Ansprüche 4 bis 8, wenn einer der Ansprüche 4 bis 8 auf den Anspruch 3 rückbezogen ist,
**dadurch gekennzeichnet,**
**dass** der Rahmen (20) zusammen mit der Kamera (40), der Lichtquelle (41), dem Spiegel (43) und der Blasvorrichtung (44) aus der Druckmaschine (1) entnehmbar ist.

10. Druckmaschine nach einem der vorhergehenden Ansprüche,
**dadurch gekennzeichnet,**
**dass** die Kamera (40) derart auf den Bedruckstoff (3) gerichtet ist, dass betriebsmäßig eine Inspektion und/oder Farbmessung eines Druckbildes auf dem Bedruckstoff erfolgt.

## Claims

1. Printing press with a device (10) for conveying printing substrate (3) and with a camera (40) and at least one light source (41), whereby the camera (40) and the light source (41) are arranged on a frame (29), which, together with the camera (40) and the light source (41), is designed to be pivotable about a horizontal axis (21) and has a working position, whereby the camera (40) detects at least one section (4) of the printed substrate, and whereby a locking device (24) is provided which positions the frame (20) in the working position,
**characterized in that**
the frame (20) includes a connection (50) for the cooling water.

2. Printing press according to claim 1,
**characterized in that**
the connection (50) for cooling water is arranged directly on the frame (20) or indirectly on a component arranged on the frame and/or that the locking device (24) actively pushes the frame (20) into the work position.

3. Printing press according to claim 2,
**characterized in that**
at least one mirror (43) is arranged on the frame (20) and that the frame is pivotable together with the camera (40), the light source (41) and the mirror.

4. Printing press according to any one of the preceding claims,
**characterized in that**
at least one blowing device (44) is arranged on the frame (20) and that the frame is pivotable together with the camera (40) and the blowing device (44).

5. Printing press according to claim 4,
**characterized in that**
the blowing device (44) directs blast air (45a) onto the printing substrate (3) in order to press the printing substrate onto the apparatus (10) for transporting printing substrate.

6. Printing press according to claim 4,
**characterized in that**
the blowing device (44) directs blast air (45a) onto the camera (40) and/or the light source (41) in order to clean the camera or the light source.

7. Printing press according to any one of the preceding claims,
**characterized in that**
the frame (20) is arranged under a step (5) for an operator of the printing press (1).

8. Printing press according to claim 7,
**characterized in that**
the frame (20) and the step (5) can be pivoted separately.

9. Printing press as claimed in any one of claims 4 to 8, if one of the claims 4 to 8 refers to claim 3,
**characterized in that**
the frame (20) is removable from the printing press (1) together with the camera (40), the light source (41), the mirror (43) and the blowing device (44).

10. Printing press according to any one of the preceding claims,
**characterized in that**
the camera (40) is directed at the printing substrate (3) in such a way that an inspection and/or color measurement of a printed image is carried out on the printing substrate during operation.

## Revendications

1. Machine à imprimer équipée d'un dispositif (10) pour le convoyage du support d'impression (3) et d'une caméra (40) ainsi que d'au moins une source lumineuse (41), pour laquelle la caméra (40) et la source lumineuse (41) sont disposées sur un cadre (29) qui est conçu de manière à pouvoir pivoter avec la caméra (40) et la source lumineuse (41) autour d'un axe horizontal (21) et qui présente une position de travail, pour laquelle la caméra (40) enregistre au moins une section (4) du support d'impression, et pour laquelle il est prévu un dispositif de verrouillage (24) qui positionne le cadre (20) dans la position de travail,
**caractérisée en ce**
**que** le cadre (20) est muni d'un raccord (50) pour l'eau de refroidissement.

2. Machine à imprimer selon la revendication 1,
**caractérisée en ce**
**que** le raccord (50) pour l'eau de refroidissement est monté directement sur le cadre (20) ou indirectement sur un composant monté sur le cadre et/ou que le dispositif de verrouillage (24) repousse activement le cadre (20) dans la position de travail.

3. Machine à imprimer selon la revendication 2,
**caractérisée en ce**
**qu'**au moins un miroir (43) est monté sur le cadre (20) et que le cadre peut pivoter conjointement avec la caméra (40), la source de lumière (41) et le miroir.

4. Machine à imprimer selon l'une des revendications précédentes,
**caractérisée en ce**
**qu'**au moins un dispositif de soufflage (44) est monté sur le cadre (20) et que le cadre peut pivoter conjointement avec la caméra (40) et le dispositif de soufflage (44).

5. Machine à imprimer selon la revendication 4,
**caractérisée en ce**
**que** le dispositif de soufflage (44) dirige de l'air de soufflage (45a) sur le support d'impression (3) afin de plaquer le support d'impression sur le dispositif (10) de convoyage du support d'impression.

6. Machine à imprimer selon la revendication 4,
**caractérisée en ce**
**que** le dispositif de soufflage (44) dirige de l'air de soufflage (45a) sur la caméra (40) et/ou la source lumineuse (41) afin de nettoyer la caméra ou la source lumineuse.

7. Machine à imprimer selon l'une des revendications précédentes,
**caractérisée en ce**
**que** le cadre (20) est positionné sous un marchepied (5) pour un opérateur de la machine à imprimer (1).

8. Machine à imprimer selon la revendication 7,
**caractérisée en ce**
**que** le cadre (20) et le marchepied (5) peuvent pivoter séparément.

9. Machine à imprimer selon l'une des revendications 4 à 8, si l'une des revendications 4 à 8 est référencée à la revendication 3,
**caractérisée en ce**
**que** le cadre (20) est amovible de la machine d'impression (1) conjointement avec la caméra (40), la source lumineuse (41), le miroir (43) et le dispositif de soufflage (44).

10. Machine à imprimer selon l'une des revendications précédentes,
**caractérisée en ce**
**que** la caméra (40) est orientée vers le support d'impression (3) de sorte qu'une inspection et/ou une mesure des couleurs d'une image d'impression sur le support d'impression est effectuée pendant le fonctionnement.
